(19) Europäisches Patentamt / European Patent Office / Office européen des brevets

(11) **EP 4 431 552 B1**

(12) **EUROPEAN PATENT SPECIFICATION**

(45) Date of publication and mention
of the grant of the patent:
**30.07.2025 Bulletin 2025/31**

(21) Application number: **23161745.7**

(22) Date of filing: **14.03.2023**

(51) International Patent Classification (IPC):
**C08J 5/18** (2006.01)      **C08F 110/02** (2006.01)
**C08L 23/06** (2006.01)

(52) Cooperative Patent Classification (CPC):
(C-Sets available)
**C08J 5/18; C08F 210/06; C08L 23/06;**
C08J 2323/06; C08J 2323/08; C08J 2423/06;
C08L 2203/16                                    (Cont.)

(54) **BIAXIALLY ORIENTED POLYETHYLENE FILM WITH IMPROVED STIFFNESS**

BIAXIAL ORIENTIERTE POLYETHYLENFOLIE MIT VERBESSERTER STEIFIGKEIT

FILM DE POLYÉTHYLÈNE ORIENTÉ BIAXIALEMENT PRÉSENTANT UNE RIGIDITÉ AMÉLIORÉE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**18.09.2024 Bulletin 2024/38**

(73) Proprietor: **Borealis GmbH**
**1020 Vienna (AT)**

(72) Inventors:
• **WANG, Jingbo**
**4021 Linz (AT)**
• **BERGER, Friedrich**
**4021 Linz (AT)**
• **ALABRUNE, Arnaud**
**92400 Courbevoie (FR)**
• **POTTER, Elisabeth**
**4021 Linz (AT)**

(74) Representative: **Maiwald GmbH**
**Elisenhof**
**Elisenstraße 3**
**80335 München (DE)**

(56) References cited:
**EP-A1- 3 199 342**          **EP-A1- 4 130 138**
**WO-A1-2006/074693**      **US-A1- 2015 094 418**
**US-A1- 2017 166 333**

EP 4 431 552 B1

(52) Cooperative Patent Classification (CPC): (Cont.)

C-Sets
**C08L 23/06, C08L 23/0815, C08L 23/04;**
C08F 110/02, C08F 4/6492;
C08F 110/02, C08F 2500/07, C08F 2500/12;
C08F 210/16, C08F 2/001;

C08F 210/16, C08F 210/08, C08F 2500/07,
C08F 2500/12, C08F 2500/04, C08F 2500/05,
C08F 2500/34, C08F 2500/33, C08F 2500/20,
C08F 2500/26, C08F 2500/27;
C08F 210/16, C08F 210/08, C08F 2500/07,
C08F 2500/12, C08F 2500/27

**Description**

**Field of Invention**

The present invention pertains to a biaxially oriented polyethylene (BOPE) film comprising a polyethylene composition, comprising a high density polyethylene (HDPE) and a polyethylene wax. The present invention further pertains to a use of the BOPE film in packaging articles.

**Background of Invention**

Packaging industry is constantly in need for packaging materials that will be suitable to preserve the packed material in a desired state without compromising their properties. Polyolefin films, mostly in multilayered form, are widely utilized for that purpose. Polyethylene films in multilayered film structures are one of the most commonly used solutions, which is usually laminated with a film layer made of PET. Current trend in the polyolefin industry, however, is shifting towards to more mono-material solutions, allowing the concept of Design for Recycling (DfR) to be adapted. For that purpose, replacing PET layer with oriented polyethylene film layer and obtaining a full-polyethylene film structure is seen as a promising solution.

WO 2020/257411 relates to an oriented multilayer film that can be used as a flexible packaging material, comprising a core layer, a first and a second skin layer, wherein the core layer comprises at least 50 wt.-% high density polyethylene (HDPE). Although the film described can be biaxially oriented, it contains different layer structures containing materials other than polyethylene, making it not suitable for design for recycling concept.

EP 1609811 B1 describes a polyethylene film which can be biaxially oriented comprising high density polyethylene (HDPE) and a hydrocarbon resin. However, this document focuses on improving the moisture barrier properties with the inclusion of the hydrocarbon resin.

WO 2006/074693 discloses films for packaging with an improved water vapour transmission rate comprising a multimodal polymer composition.

As a consequence, there remains a need for designing a packaging material that can easily be recycled after its intended use and has required mechanical properties in terms of improved stiffness in order to protect contents of the packaging.

**Summary of the Invention**

The present invention pertains to a biaxially oriented polyethylene (BOPE) film comprising a polyethylene composition (C) having a density of from 940 to 970 $kg/m^3$, wherein the polyethylene composition comprises:

a) 75-99 wt.-%, based on the total weight of the polyethylene composition (C), of a high density polyethylene (HDPE) with a density of from 945 to 970 $kg/m^3$, and a melt flow rate $MFR_2$ of from 0.1 to 3.0 g/10 min, comprising at least two fractions:

a1) 30-70 wt.-%, based on the total weight of the HDPE, of a first polyethylene fraction (PE1) with a density of from 955 to 980 $kg/m^3$, and a melt flow rate $MFR_2$ of from 100 to 1000 g/10 min, and

a2) 30-70 wt.-%, based on the total weight of the HDPE, of a second polyethylene fraction (PE2) with a density of from 920 to 970 $kg/m^3$, and a melt flow rate $MFR_2$ of from 0.0001 to 1.0 g/10 min, and

b) 1-25 wt.-%, based on the total weight of the polyethylene composition (C), of a polyethylene wax having a density of from 940 to 995 $kg/m^3$;

wherein the density is determined in accordance with ISO1183 and the melt flow rate $MFR_2$ is determined at a temperature of 190 °C under a load of 2.16 kg in accordance with ISO1133.

The present invention further pertains to use of the biaxially oriented polyethylene (BOPE) film described herein in packaging articles.

**Detailed Description**

All the terms used herein is to be understood within their general meaning known to the skilled person in the art. In order to be more precise, the following terms will have the meaning as described hereinbelow.

A high density polyethylene (HDPE) is a polymer of ethylene having a density usually ranging between 930 and

970 kg/m$^3$.

A multimodal polymer is a polymer having two or more fractions different from each other in at least one property, such as weight average molecular weight or comonomer content. The molecular weight distribution curve of such multimodal polymers (graph of polymer weight fraction vs. molecular weight) exhibits two or more maxima depending on the modality, or such curve is distinctly broadened in comparison with the curves of individual fractions. When the polymer contains two different fractions, it is called "bimodal".

All the properties of the polymers as described herein are measured in accordance with the methods described in section "Measurement methods", unless otherwise provided.

*Polyethylene Composition (C)*

The biaxially oriented polyethylene (BOPE) film according to the present invention comprises a polyethylene composition (C). The polyethylene composition (C) according to the present invention comprises:

a) 75-99 wt.-%, based on the total weight of the polyethylene composition (C), of a high density polyethylene (HDPE) with a density of from 945 to 970 kg/m$^3$, and a melt flow rate MFR$_2$ of from 0.1 to 3.0 g/10 min, comprising at least two fractions:

a1) 30-70 wt.-%, based on the total weight of the HDPE, of a first polyethylene fraction (PE1) with a density of from 955 to 980 kg/m$^3$, and a melt flow rate MFR$_2$ of from 100 to 1000 g/10 min, and

a2) 30-70 wt.-%, based on the total weight of the HDPE, of a second polyethylene fraction (PE2) with a density of from 920 to 970 kg/m$^3$, and a melt flow rate MFR$_2$ of from 0.0001 to 1.0 g/10 min,

b) 1-25 wt.-%, based on the total weight of the polyethylene composition (C), of a polyethylene wax having a density of from 940 to 995 kg/m$^3$.

The polyethylene composition (C) has a density of from 940 to 970 kg/m$^3$, preferably of from 945 to 965 kg/m$^3$.

It is preferred when the polyethylene composition (C) has:

a) a melt flow rate MFR$_2$ of from 0.1 to 3.0 g/10 min, more preferably from 0.5 to 2.0 g/10 min; and/or

b) a melt flow rate MFR$_{21}$ of from 20 to 100 g/10 min, more preferably from 55 to 80 g/10 min.

The polyethylene composition (C) preferably has:

- a weight-average molecular weight (Mw) ranging from 50,000 to 200,000 g/mol, more preferably from 100,000 to 150,000 g/mol; and/or
- a z-average molecular weight (Mz) ranging from 500,000 to 900,000 g/mol, more preferably from 550,000 to 750,000 g/mol.

It is also preferred when the ratio of Mw/Mn of the polyethylene composition (C) ranges from 10 to 30, more preferably from 18-25. The ratio of Mz/Mw is preferably ranging from 1 to 20, more preferably from 3 to 10.

The polyethylene composition preferably has:

- a melting temperature Tm ranging from 115 to 140 °C, more preferably from 120 to 135 °C and/or
- a crystallization temperature Tc ranging from 105 to 135 °C, more preferably from 110 to 120 °C.

The melting enthalpy Hm of the polyethylene composition preferably ranging from 150 to 300 J/g, more preferably from 180 to 280 J/g.

The BOPE film preferably comprises the polyethylene composition (C) in an amount of equal to or higher than 70 wt.-%, more preferably equal to or higher than 80 wt.-%, more preferably equal to or higher than 90 wt.-%, and more preferably equal to or higher than 95 wt.-%, based on the total weight of the BOPE film. In a more preferred embodiment, the BOPE film consists of the polyethylene composition (C).

*High Density Polyethylene (HDPE)*

The polyethylene composition (C) comprises a high density polyethylene (HDPE) in an amount from 75 to 99 wt.-

%, preferably from 90 to 97 wt.-%, based on the total weight of the polyethylene composition (C).

The HDPE according to the present invention has a density of from 945 to 970 kg/m$^3$ and a melt flow rate MFR$_2$ of from 0.1 to 3.0 g/10 min. In a preferred embodiment, the HDPE has:

a) a density of from 950 to 965 kg/m$^3$; and/or

b) a melt flow rate MFR$_2$ of from 0.3 to 2.0 g/10 min, more preferably from 0.5 to 1.5 g/10 min, and most preferably from 0.6 to 1.2 g/10 min.

The HDPE according to the present invention comprises at least two fractions:

a1) 30-70 wt.-%, based on the total weight of the HDPE, of a first polyethylene fraction (PE1) with a density of from 955 to 980 kg/m$^3$, and a melt flow rate MFR$_2$ of from 100 to 1000 g/10 min, and

a2) 30-70 wt.-%, based on the total weight of the HDPE, of a second polyethylene fraction (PE2) with a density of from 920 to 970 kg/m$^3$, and a melt flow rate MFR$_2$ of from 0.0001 to 1.0 g/10 min.

In a preferred embodiment, the HDPE is bimodal, meaning that it contains only two polyethylene fractions; the first polyethylene fraction (PE1) and the second polyethylene fraction (PE2).

The HDPE preferably has a comonomer content of from 0 to 1.5 mol-%, more preferably from 0.1 to 0.6 mol-%.

The HDPE according to the present invention is preferably a copolymer of ethylene and at least one C$_3$-C$_{12}$ alpha-olefin. In particular, C$_3$-C$_{10}$ alpha-olefins are preferred, such as propene, 1-butene, 1-hexene, 1-octene, and 4-methyl-1-pentene. In a most preferred embodiment, HDPE is a copolymer of ethylene and only one C$_4$-C$_{10}$ alpha-olefin. Hence it is the most preferred that HDPE is ethylene/1-butene copolymer.

*First Polyethylene Fraction (PE1)*

The HDPE of the present invention comprises a first polyethylene fraction (PE1) in an amount of from 30 to 70 wt.-%, preferably from 40 to 55 wt.-%, based on the total weight of the HDPE.

The first polyethylene fraction (PE1) has a density of from 955 to 980 kg/m$^3$ and a melt flow rate MFR$_2$ of from 100 to 1000 g/10 min. In a preferred embodiment, the first polyethylene fraction (PE1) has:

a) a density of from 960 to 975 kg/m$^3$, more preferably from 965 to 975 kg/m$^3$; and/or

b) a melt flow rate MFR$_2$ of from 200 to 500 g/10min.

In a preferred embodiment, the first polyethylene fraction (PE1) is a homopolymer of ethylene; in other words, it does not contain any comonomer units.

*Second Polyethylene Fraction (PE2)*

The HDPE of the present invention comprises a second polyethylene fraction (PE2) in an amount of from 30 to 70 wt.-%, preferably from 45 to 60 wt.-%, based on the total weight of the HDPE.

The second polyethylene fraction (PE2) has a density of from 920 to 970 kg/m$^3$ and a melt flow rate MFR$_2$ of from 0.0001 to 1.0 g/10 min. In a preferred embodiment, the second polyethylene fraction (PE2) has:

a) a density of from 930 to 960 kg/m$^3$, and most preferably from 935 to 950 kg/m$^3$; and/or

b) a melt flow rate MFR$_2$ of from 0.0005 to 0.5 g/10 min, and most preferably from 0.001 to 0.05 g/10 min.

In a preferred embodiment, the second polyethylene fraction (PE2) is a copolymer of ethylene and at least one C$_3$-C$_{12}$ alpha-olefin. In particular, C$_3$-C$_{10}$ alpha-olefins are preferred, such as propene, 1-butene, 1-hexene, 1-octene, and 4-methyl-1-pentene. In a most preferred embodiment, PE2 is a copolymer of ethylene and only one C$_4$-C$_{10}$ alpha-olefin. Hence it is the most preferred that PE2 is ethylene/1-butene copolymer.

*Additives*

Optionally, the HDPE of the present invention may comprise additives in an amount of from 0.1 to 5 wt.-% relative to the total weight of the HDPE. The additives are selected from the group of acid scavengers, antioxidants, anti-blocking agents, UV-stabilizers, anti-scratch agents, mold release agents, lubricants, anti-static agents, pigments, and mixtures thereof.

*Polyethylene Wax*

The polyethylene composition (C) according to the present invention comprises a polyethylene wax in an amount of from 1 to 25 wt.-%, preferably from 3 to 10 wt.-%, based on the total weight of the polyethylene composition (C).

The polyethylene wax has a density of from 940 to 995 $kg/m^3$, preferably from 960 to 990 $kg/m^3$, and more preferably from 975 to 985 $kg/m^3$.

It is preferred when the polyethylene wax has:

- a weight average molecular weight Mw ranging from 4,000 to 10,000 g/mol, more preferably from 5,000 to 8,000 g/mol; and/or
- Mw/Mn ratio ranging from 1.5 to 4.0, more preferably from 2.2 to 3.5.

The polyethylene wax preferably has one or more, preferably all, of the properties below:

- a melting temperature Tm of from 115 to 140 °C, more preferably from 125 to 135 °C;
- a melting enthalpy Hm of from 200 to 300 J/g, more preferably from 230 to 275 J/g.

The polyethylene wax may be produced in a polymerization process in the presence of a catalyst, which could preferably be a Ziegler-Natta catalyst or a metallocene catalyst. Metallocene catalysts are the most preferred.

The polyethylene wax can be an ethylene homopolymer wax or an ethylene random copolymer wax. The ethylene random copolymer wax is preferably a random copolymer of ethylene and $C_3$ to $C_{10}$ alpha-olefin comonomers. In a more preferred embodiment, the polyethylene wax is an ethylene homopolymer wax.

Commercially available polyethylene waxes may be used; such as Excerex 40800T (Mitsui Chemicals) or Licocene PE4201 (Clariant).

*Process for HDPE*

The HDPE of the present invention may be produced by polymerization using conditions which create a multimodal polymer product ideally using a Ziegler Natta catalyst system. Typically, a two or more stage, i.e. multistage, polymerization process is used with different process conditions in the different stages or zones (e.g. different temperatures, pressures, polymerization media, hydrogen partial pressures, etc.). Preferably, the multimodal composition is produced by a multistage polymerization, e.g. using a series of reactors, with optional comonomer addition preferably in only the reactor(s) used for production of the higher/highest molecular weight component(s). A multistage process is defined to be a polymerization process in which a polymer comprising two or more fractions is produced by producing each or at least two polymer fraction(s) in a separate reaction stage, usually with different reaction conditions in each stage, in the presence of the reaction product of the previous stage which comprises a polymerization catalyst. The polymerization reactions used in each stage may involve conventional ethylene homopolymerization or copolymerization reactions, e.g. gas-phase, slurry phase, liquid phase polymerizations, using conventional reactors, e.g. loop reactors, gas phase reactors, batch reactors etc. (see for example WO97/44371 and WO96/18662).

Preferably, the HDPE according to the present invention is a bimodal HDPE prepared in a two-stage polymerization process; a first and a second polymerization stage.

*First Polymerization Stage*

The first polymerization stage produces an ethylene homopolymer or an ethylene copolymer, typically an ethylene homopolymer, which is subsequently fed to the second polymerization stage. The second polymerization stage can produce a further ethylene homopolymer, or an ethylene copolymer, preferably an ethylene copolymer.

The first polymerization stage is preferably a slurry polymerization step.

The slurry polymerization usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons. An especially preferred diluent is propane, possibly containing minor amounts of methane, ethane and/or butane.

The ethylene content in the fluid phase of the slurry may be from 1 to 50 % by mole, preferably from 2 to 20 % by mole and in particular from 2 to 10 % by mole. The benefit of having a high ethylene concentration is that the productivity of the catalyst is increased but the drawback is that more ethylene then needs to be recycled than if the concentration was lower.

The temperature in the first polymerization stage is typically from 60 to 100 °C. An excessively high temperature should be avoided to prevent partial dissolution of the polymer into the diluent and the fouling of the reactor. The pressure is generally from 1 to 150 bar, preferably from 40 to 80 bar.

The slurry polymerization may be conducted in any known reactor used for slurry polymerization. Such reactors include a continuous stirred tank reactor and a loop reactor. It is especially preferred to conduct the slurry polymerization in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654. It is thus preferred to conduct the first polymerization stage as a slurry polymerization in a loop reactor.

The slurry may be withdrawn from the reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from the first polymerization stage continuously.

Hydrogen is typically introduced into the first polymerization stage for controlling the $MFR_2$ of the resultant polymer. The amount of hydrogen needed to reach the desired MFR depends on the catalyst used and the polymerization conditions. The desired polymer properties may be obtained in slurry polymerization in a loop reactor with the molar ratio of hydrogen to ethylene of from 100 to 1000 mol/kmol (or mol/1000 mol) and preferably of from 200 to 800 mol/kmol. The average residence time in the first polymerization stage is typically from 20 to 120 minutes, preferably from 30 to 80 minutes. As it is well known in the art the average residence time $\tau$ can be calculated from Equation 1 below:

## Equation 1: Residence Time

$$\tau = \frac{V_R}{Q_O}$$

Where $V_R$ is the volume of the reaction space (in case of a loop reactor, the volume of the reactor, in case of the fluidized bed reactor, the volume of the fluidized bed) and $Q_o$ is the volumetric flow rate of the product stream (including the polymer product and the fluid reaction mixture).

The production rate is suitably controlled with the catalyst feed rate. It is also possible to influence the production rate by suitable selection of the monomer concentration. The desired monomer concentration can then be achieved by suitably adjusting the ethylene feed rate.

As a result of the first polymerization stage, the first polyethylene fraction (PE1) is produced.

*Second Polymerization Stage*

In the second polymerization stage, ethylene is polymerized, optionally together with at least one alpha-olefin comonomer, in the presence of the catalyst and the ethylene polymer produced in the first polymerization stage, PE1. It will thus be appreciated that the second polymerization stage generates an ethylene polymer, which combines with the ethylene polymer from the first polymerization stage (PE1), to form the HDPE. Preferable comonomers are discussed hereinbefore, however it is noted that it is particularly preferable if the at least one alpha-olefin is butene.

The second polymerization stage is preferably a gas phase polymerization step, i.e. carried out in a gas-phase reactor. Any suitable gas phase reactor known in the art may be used, such as a fluidised bed gas phase reactor.

For gas phase reactors, the reaction temperature used will generally be in the range 60 to 115 °C (e.g. 70 to 110 °C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

A chain transfer agent (e.g. hydrogen) is typically added to the second polymerization stage, preferably in amounts of 50 to 500 mol of H2/kmol ethylene.

The split between the first polymerization stage and the second polymerization stage (i.e. between the slurry polymerization and the gas phase polymerization) is typically 30:70 to 70:30, more preferably 40:55 to 60:45.

As a result of the second polymerization step, a mixture of the first polyethylene fraction PE1 and the second polyethylene fraction PE2 is produced and is called a first polyethylene mixture PEM1.

*Prepolymerization*

The polymerization steps discussed above may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is conducted in slurry.

Thus, the prepolymerization step may be conducted in a loop reactor. The prepolymerization is then preferably conducted in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons.

The temperature in the prepolymerization step is typically from 0 to 90 °C, preferably from 20 to 80 °C and more preferably from 55 to 75 °C.

The pressure is not critical and is typically from 1 to 150 bar, preferably from 40 to 80 bar.

The amount of monomer is typically such that from 0.1 to 1000 grams of monomer per one gram of solid catalyst component is polymerized in the prepolymerization step. As the person skilled in the art knows, the catalyst particles recovered from a continuous prepolymerization reactor do not all contain the same amount of prepolymer. Instead, each particle has its own characteristic amount which depends on the residence time of that particle in the prepolymerization reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount of polymer produced in the prepolymerization typically lies within 1-5 wt.-% in respect to the final HDPE. Within the scope of the present invention, the split of the prepolymerization is included in the split of the first polymerization stage.

*Catalyst*

The polymerization is typically conducted in the presence of a Ziegler-Natta polymerization catalyst. Suitable Ziegler-Natta (ZN) catalysts generally comprise at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), optionally a compound of group 13 of the Periodic Table (IUPAC), and optionally an internal organic compound, like an internal electron donor. A ZN catalyst may also comprise further catalyst component(s), such as a cocatalyst and optionally external additives.

Suitable ZN catalysts preferably contain a magnesium compound, an aluminum compound and a titanium compound supported on a particulate support.

The particulate support can be an inorganic oxide support, such as silica, alumina, titania, silica-alumina, silica-titania or a MgCl2 based support. Preferably, the support is silica or a MgCl2 based support.

Particularly preferred Ziegler-Natta catalysts are such as described in EP 1378528 A1.

If used, the magnesium compound preferably is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is a chlorine containing aluminium alkyl. Especially preferred compounds are aluminium alkyl dichlorides and aluminium alkyl sesquichlorides.

The transition metal compound of Group 4 to 6 is preferably a titanium or vanadium compound, more preferably a halogen containing titanium compound, most preferably chlorine containing titanium compound. An especially preferred titanium compound is titanium tetrachloride.

The catalyst can be prepared by sequentially contacting the carrier with the above mentioned compounds, as described in EP 688794 or WO 99/51646. Alternatively, it can be prepared by first preparing a solution from the components and then contacting the solution with a carrier, as described in WO 01/55230.

Another group of suitable ZN catalysts contain a titanium compound together with a magnesium halide compound acting as a support. Thus, the catalyst contains a titanium compound and optionally a Group 13 compound for example an aluminium compound on a magnesium dihalide, like magnesium dichloride. Such catalysts are disclosed, for instance, in WO 2005/118655, EP 810235, WO 2014/096296 and WO 2016/097193.

Suitable activators are group 13 metal compounds, typically group 13 alkyl compounds and especially aluminium alkyl compounds, where the alkyl group contains 1 to 16 C-atoms. These compounds include trialkyl aluminium compounds, such as trimethylaluminium, triethylaluminium, tri-isobutylaluminium, trihexylaluminium and tri-n-octylaluminium, alkyl aluminium halides, such as ethylaluminium dichloride, diethylaluminium chloride, ethylaluminium sesquichloride, dimethylaluminium chloride and the like. Especially preferred activators are trialkylaluminiums, of which triethylaluminium, trimethylaluminium and tri-isobutylaluminium are particularly used.

The amount in which the activator is used depends on the specific catalyst and activator. Typically triethylaluminium is used in such amount that the molar ratio of aluminium to the transition metal, like Al/Ti, is from 1 to 1000, preferably from 3 to 100 and in particular from about 5 to about 30 mol/mol.

An optional internal organic compound may be chosen from the following classes: ethers, esters, amines, ketones, alcohols, anhydrides or nitriles or mixtures thereof. Preferably, the optional internal organic compound is selected from ethers and esters, most preferably from ethers. Preferred ethers are of 2 to 20 carbon-atoms and especially mono, di or multi cyclic saturated or unsaturated ethers comprising 3 to 6 ring atoms. Typical cyclic ethers suitable in the present invention, if used, are tetrahydrofuran (THF), substituted THF, like 2-methyl THF, di-cyclic ethers, like 2,2-di(2-tetrahydrofuryl)propane, 2,2-di-(2-furan)-propane, or isomers or mixtures thereof. Internal organic compounds are also often called as internal electron donors.

*Process for Biaxially Oriented Polyethylene (BOPE) Film*

The manufacture of biaxially oriented films is well-known (e.g. chapter 2 and 3 in Biaxial stretching of film: principles and applications, edited by Mark T. DeMeuse, Woodhead Publishing, 2011). The person skilled in the art can apply his/her knowledge of BOPP film production to the manufacture of the BOPE films of the invention. The films of the invention may be manufactured by any known technology, such as the double bubble, tenter frame or spontaneous process.

In a typical process, the components of the film are initially mixed and melted within an extruder. The temperature within the extruder is conventional and will be sufficient to ensure melting of the components. The extrudate is cast to form a cast film (or flat film) which is then cooled. The film should ideally be cooled to a temperature of less than 50 °C before any reheating process is begun. The film is then reheated and stretching is begun. The temperature during the stretching phase may vary and may decrease as the stretching process continues. The reheat temperature in this first step is defined as the temperature at the start of the stretching process. Once stretching in the machine direction is complete, the film is annealed. This maintains the MDO film structure for the TD stretch. Reheating for the second stretching phase is carried out and again, the temperature can vary during the stretching phase. The reheat temperature in this second step is defined therefore as the temperature at the start of the second stretch procedure. Finally, the film is allowed to cool.

*BOPE Film*

As mentioned hereinabove, the BOPE film preferably comprises the polyethylene composition (C) in an amount of equal to or higher than 70 wt.-%, more preferably equal to or higher than 80 wt.-%, more preferably equal to or higher than 90 wt.-%, and more preferably equal to or higher than 95 wt.-%, based on the total weight of the BOPE film. In a more preferred embodiment, the BOPE film consists of the polyethylene composition (C). In addition, BOPE film according to the present invention may comprise non-polyethylene based polymers, i.e. polymers other than polyethylenes, from 0 to a maximum of 10 wt.-%, preferably a maximum of 5 wt.-%, hence the BOPE film of the present invention is made substantially of polyethylene-based materials, in order to ensure design for recycling.

In a preferred embodiment, the BOPE film according to the present invention exhibits improved mechanical properties, in terms of tensile modulus in both machine and transverse directions. According to this embodiment, the BOPE film preferably has:

- a tensile modulus in machine direction (TM/MD) ranging from 1400 to 2400 MPa, preferably from 1700 to 2200 MPa and most preferably from 1800 to 2000 MPa; and/or
- a tensile modulus in transverse direction (TM/TD) ranging from 1500 to 2500 MPa, preferably from 1700 to 2300 MPa and most preferably from 1800 to 2100 MPa.

The BOPE film of the invention ideally has a stretch ratio in the machine direction (MD) and/or transverse direction (TD) of from 5.0 times to 14.0 times, more preferably from 6.0 to 10.0 times.

The BOPE film according to the present invention preferably has a thickness of from 5 to 100 $\mu$m, more preferably from 10 to 75 $\mu$m, and most preferably from 15 to 40 $\mu$m.

The BOPE film according to the present invention may be a monolayer or a multilayer film. Multilayer film may comprise 2 or more layers, such as 3, 5, 7 or more layers. Preferably, the BOPE film is a monolayer film.

The BOPE film according to the present invention may be used for the production of packaging articles like bags, pouches, labels or lids, or other technical applications like banknotes. The BOPE film of the present invention is preferably used for applications related to food packaging.

**Measurement Methods**

*Density*

The density was measured according to ISO1183, where the samples were prepared according to ISO1872-2.

*Melt Flow Rate (MFR)*

The melt flow rates were measured at a temperature of 190 °C with a load of 2.16 kg for $MFR_2$ and of 21.6 kg for $MFR_{21}$ according to ISO1133.

MFR values for the first polyethylene fraction (PE1) was directly measured after the reaction in the loop reactor, while the values for the second polyethylene fraction (PE2) was calculated using the formula (I) below:

$$MFR\,(PE2) = 10^{\left[\frac{log(MFR(PEM1))-w(PE1)x\,log(MFR(PE1)\,)}{w(PE2)}\right]}\ (I)$$

wherein

MFR(PE1) is the melt flow rate $MFR_2$ of the first polyethylene fraction PE1 in [g/10min],
w(PE1) is the weight fraction of the first polyethylene fraction PE1 in [wt.-%],
MFR(PE2) is the melt flow rate $MFR_2$ of the second polyethylene fraction PE2 in [g/10min],
w(PE2) is the weight fraction of the second polyethylene fraction PE2 in [wt.-%],
MFR(PEM1) is the melt flow rate $MFR_2$ of the first polyethylene mixture PEM1 in [g/10min].

Flow Rate Ratio, FRR, is a ratio between MFR values at different loads. For instance, FRR21/2 is a ratio between $MFR_{21}$ and $MFR_2$.

*Gel Permeation Chromatography (GPC)*

The weight average molecular weight Mw, the number average molecular weight Mn and the z-average molecular weight Mz were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N}(A_i/M_i)}\ \text{(II)}$$

$$M_w = \frac{\sum_{i=1}^{N}(A_i\,x\,M_i)}{\sum_{i=1}^{N} A_i}\ \text{(III)}$$

$$M_z = \frac{\sum_{i=1}^{N}(A_i\,x\,M_i^2)}{\sum_{i=1}^{N}(A_i x M_i)}\ \text{(IV)}$$

For a constant elution volume interval $\Delta V_i$, where $A_i$, and $M_i$ are the chromatographic peak slice area and polyolefin molecular weight (Mw), respectively associated with the elution volume, $V_i$, where N is equal to the number of data points obtained from the chromatogram between the integration limits.

A high temperature GPC instrument, equipped with either infrared (IR) detector (IR4 or IR5 from PolymerChar (Valencia, Spain), equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 μL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3} \text{ mL/g}, \ \alpha_{PS} = 0.655$$

$$K_{PE} = 39 \times 10^{-3} \text{ mL/g}, \ \alpha_{PE} = 0.725$$

$$K_{PP} = 19 \times 10^{-3} \text{ mL/g}, \ \alpha_{PP} = 0.725$$

A third order polynomial fit was used to fit the calibration data.

All samples were prepared in the concentration range of 0,5 -1 mg/ml and dissolved at 160 °C for 2.5 hours for PP or 3 hours for PE under continuous gentle shaking.

*Differential Scanning Calorimetry (DSC)*

Melting temperaure Tm, crystallization temperature Tc and melting enthalpy Hm were measured with a TA Instrument Q2000 differential scanning calorimetry (DSC) on 5 to 7 mg samples. DSC is run according to ISO 11357 / part 3 / method C2 in a heat / cool / heat cycle with a scan rate of 10 °C/min in the temperature range of -30 to +225°C. Crystallization temperature Tc was determined from the cooling step, while melting temperature Tm and melting enthalpy Hm are determined from the second heating step.

*Tensile Modulus*

Tensile modulus in machine direction (MD) and in transverse direction (TD) were measured on a BOPE film, with a thickness of 20 μm, as 1% secant modulus with 5 mm/min test speed and 50 mm gauge length according to ASTM D882.

*Comonomer Content*

Quantitative nuclear-magnetic resonance (NMR) spectroscopy was used to quantify the comonomer content of the polymers.

Quantitative $^{13}$C{$^{1}$H} NMR spectra recorded in the molten-state using a Bruker Advance III 500 NMR spectrometer operating at 500.13 and 125.76 MHz for $^{1}$H and $^{13}$C respectively. All spectra were recorded using a $^{13}$C optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.{klimke06, parkinson07, castignolles09} Standard single-pulse excitation was employed utilising the NOE at short recycle delays {pollard04, klimke06} and the RS-HEPT decoupling scheme {fillip05,griffin07}. A total of 1024 (1k) transients were acquired per spectra.

Quantitative $^{13}$C{$^{1}$H} NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way.

Characteristic signals corresponding to the incorporation of 1-butene were observed and the comonomer fraction calculated as the fraction of 1-butene in the polymer with respect to all monomer in the polymer:

$$fBtotal = (Btotal / (Etotal + Btotal + Htotal)$$

The amount isolated 1-butene incorporated in EEBEE sequences was quantified using the integral of the $_*B2$ sites at 38.3 ppm accounting for the number of reporting sites per comonomer:

$$B = I_{*B2}$$

The amount consecutively incorporated 1-butene in EEBBEE sequences was quantified using the integral of the $\alpha\alpha B2B2$ site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the $\beta\beta B2B2$ site at 24.7 ppm accounting for the number of reporting sites per comonomer:

$$BEB = 2 * I\beta\beta B2B2$$

Due to the overlap of the *B2 and *βB2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non-consecutively incorporated 1-butene:

$$Btotal = B + BB + BEB$$

The total mole fraction of 1-butene in the polymer was then calculated as:

$$fB = (Btotal / ( Etotal + Btotal + Htotal)$$

The mole percent comonomer incorporation is calculated from the mole fraction:

$$B [mol\%] = 100 * fB$$

References:

Klimke, K., Parkinson, M., Piel, C., Kaminsky, W., Spiess, H.W., Wilhelm, M., Macromol. Chem. Phys. 2006;207:382.

Parkinson, M., Klimke, K., Spiess, H.W., Wilhelm, M., Macromol. Chem. Phys. 2007;208:2128.

Pollard, M., Klimke, K., Graf, R., Spiess, H.W., Wilhelm, M., Sperber, O., Piel, C., Kaminsky, W., Macromolecules 2004;37:813.

Filip, X., Tripon, C., Filip, C., J. Mag. Resn. 2005, 176, 239

Griffin, J.M., Tripon, C., Samoson, A., Filip, C., and Brown, S.P., Mag. Res. in Chem. 2007 45, S1, S198

Castignolles, P., Graf, R., Parkinson, M., Wilhelm, M., Gaborieau, M., Polymer 50 (2009) 2373

Busico, V., Cipullo, R., Prog. Polym. Sci. 26 (2001) 443

Busico, V., Cipullo, R., Monaco, G., Vacatello, M., Segre, A.L., Macromoleucles 30 (1997) 6251

Zhou, Z., Kuemmerle, R., Qiu, X., Redwine, D., Cong, R., Taha, A., Baugh, D. Winniford, B., J. Mag. Reson. 187 (2007) 225

Busico, V., Carbonniere, P., Cipullo, R., Pellecchia, R., Severn, J., Talarico, G., Macromol. Rapid Commun. 2007, 28, 1128

Resconi, L., Cavallo, L., Fait, A., Piemontesi, F., Chem. Rev. 2000, 100, 1253

**Examples**

*High density polyethylene (HDPE)*

The high density polyethylene (HDPE) used in both the inventive and comparative examples is produced in a pilot plant configured to operate as prepolymerization - loop - gas phase reactor using a Ziegler-Natta catalyst whose details are disclosed in EP 1 378 528. The conditions for the reaction are presented in Table 1.

Table 1. Polymerization conditions of HDPE

| HDPE | |
|---|---|
| **Prepolymerization** | |
| Temperature [°C] | 70 |
| Pressure [kPa] | 5700 |
| $H_2$ [g/h] | 5 |
| **Loop reactor - PE1** | |
| Temperature [°C] | 95 |
| Pressure [kPa] | 5500 |
| $C_2$ concentration [mol-%] | 3.5 |
| $H_2 / C_2$ [mol/kmol] | 430 |
| Density [kg/m$^3$] | 970 |
| MFR$_2$ [g/10 min] | 350 |
| Split [%] | 49 |
| **GPR - PE1 + PE2 (PEM1)** | |
| Temperature [°C] | 85 |
| Pressure [kPa] | 2000 |
| $H_2 / C_2$ [mol/kmol] | 110 |
| $C_4 / C_2$ [mol/kmol] | 25 |
| Split [%] | 51 |
| MFR$_2$ in GPR [g/10 min]* | 0.002 |
| Density in GPR [kg/m$^3$]* | 941.6 |
| **Pellets** | |
| Density [kg/m$^3$] | 955 |
| MFR$_2$ [g/10 min] | 0.8 |

(continued)

| Pellets | |
|---|---|
| $C_4$ concentration [mol-%] | 0.4 |
| * values calculated for PE2 | |

The HDPE obtained was pelletized with 500 ppm Irganox 1010 (supplied by BASF), 2000 ppm Irgafos 168 (supplied by BASF), 500 ppm calcium stearate (CEASIT FI, supplied by Baerlocher) in a twin screw extruder. The properties presented in Table 2 below were measured on these compositions.

*Polyethylene wax*

Polyethylene wax used in the inventive example is a commercially available product supplied by Mitsui Chemicals having the name of Excerex™ 40800T. The mentioned PE wax has a density of 980 kg/m$^3$, a weight average molecular weight Mw of 6945 g/mol, an Mw/Mn ratio of 2.69, a melting temperature Tm of 128 °C, a crystallization temperature Tc of 116 °C and a melting enthalpy Hm of 245 J/g.

*Polyethylene composition (C)*

Polyethylene compositions (C) for the inventive example (IE) and the comparative example (CE) are prepared with the recipes provided in Table 2, which also shows the properties of the composition (C) that were measured.

Table 2. Recipe and properties of the polyethylene compositions (C)

| | IE | CE |
|---|---|---|
| HDPE amount [wt.-%] | 95 | 100 |
| PE wax amount [wt.-%] | 5 | - |
| Density [kg/m$^3$] | 955.7 | 955 |
| $MFR_2$ [g/10 min] | 0.84 | 0.8 |
| $MFR_{21}$ [g/10 min] | 64.9 | 47.4 |
| FRR21/2 | 77 | 59 |
| Mw [g/mol] | 124,500 | 127,000 |
| Mz [g/mol] | 663,500 | 708,000 |
| Mw/Mn | 20 | 16,1 |
| Mz/Mw | 5.3 | 5.6 |
| Tm [°C] | 131 | 131 |
| Tc [°C] | 116 | 117 |
| Hm [J/g] | 210 | 210 |

*Biaxially oriented polyethylene (BOPE) film*

Biaxially oriented polyethylene (BOPE) films of IE and CE were prepared on a Karo 4 lab scale stretch facility. Sheet before stretching was made from as lab scale cast line, with a chill roll temperature of 70 °C. The initial sheet thickness was controlled according to the maximum stretch ratio to reach the final film thickness of 20 μm. The stretch conditions, such as reheating time and stretch temperature are tuned by a person skilled in the art. The target stretch ratio was 8.0 x 8.0 in MD/TD.

The properties of the BOPE films produced are presented in Table 3 below.

Table 3. Film properties

| | IE | CE |
|---|---|---|
| Stretch ratio | 8 x 8 | 8.5 x 8.5 |

(continued)

|  | IE | CE |
|---|---|---|
| T [°C] | 125 | 125 |
| TM/MD [MPa] | 1907 | 1694 |
| TM/TD [MPa] | 1963 | 1669 |

Looking at the results presented in Table 2 above, it is evident that the addition of PE wax to the HDPE does not affect the density or the $MFR_2$ of the polyethylene composition (C). When comparing the BOPE films prepared from both compositions as shown in Table 3, it can be seen that stiffness in terms of both the tensile modulus in machine direction and transverse direction is significantly improved. Higher stiffness is a significant advantage in replacing PET layers in multilayer film structures, hence the BOPE film according to the present invention poses as a successful candidate for that purpose.

## Claims

1. A biaxially oriented polyethylene (BOPE) film comprising a polyethylene composition (C) having a density of from 940 to 970 $kg/m^3$, wherein the polyethylene composition comprises:

   a) 75-99 wt.-%, based on the total weight of the polyethylene composition (C), of a high density polyethylene (HDPE) with a density of from 945 to 970 $kg/m^3$, and a melt flow rate $MFR_2$ of from 0.1 to 3.0 g/10 min, comprising at least two fractions:

   a1) 30-70 wt.-%, based on the total weight of the HDPE, of a first polyethylene fraction (PE1) with a density of from 955 to 980 $kg/m^3$, and a melt flow rate $MFR_2$ of from 100 to 1000 g/10 min, and
   a2) 30-70 wt.-%, based on the total weight of the HDPE, of a second polyethylene fraction (PE2) with a density of from 920 to 970 $kg/m^3$, and a melt flow rate $MFR_2$ of from 0.0001 to 1.0 g/10 min,

   b) 1-25 wt.-%, based on the total weight of the polyethylene composition (C), of a polyethylene wax having a density of from 940 to 995 $kg/m^3$;

   wherein the density is determined in accordance with ISO1183 and the melt flow rate $MFR_2$ is determined at a temperature of 190 °C under a load of 2.16 kg in accordance with ISO1133.

2. The biaxially oriented polyethylene (BOPE) film according to claim 1, wherein the polyethylene composition (C) has:

   a) a melt flow rate $MFR_2$ of from 0.1 to 3.0 g/10 min, more preferably from 0.5 to 2.0 g/10 min; and/or
   b) a melt flow rate $MFR_{21}$ of from 20 to 100 g/10 min, more preferably from 55 to 80 g/10 min.

3. The biaxially oriented polyethylene (BOPE) film according to any of the preceding claims, wherein the amount of the high density polyethylene (HDPE) ranges from 90 to 97 wt.-% and the amount of the polyethylene wax ranges from 3 to 10 wt.-%, based on the total weight of the polyethylene composition (C).

4. The biaxially oriented polyethylene (BOPE) film according to any of the preceding claims, wherein the high density polyethylene (HDPE) has:

   a) a density of from 950 to 965 $kg/m^3$; and/or
   b) a melt flow rate $MFR_2$ of from 0.3 to 2.0 g/10 min, more preferably from 0.5 to 1.5 g/10 min, and most preferably from 0.6 to 1.2 g/10 min.

5. The biaxially oriented polyethylene (BOPE) film according to any of the preceding claims, wherein the high density polyethylene (HDPE) is bimodal.

6. The biaxially oriented polyethylene (BOPE) film according to any of the preceding claims, wherein the high density polyethylene (HDPE) has a total comonomer content of from 0 to 1.5 mol-%, more preferably from 0.1 to 0.6 mol-%, as determined according to the method in the description by $^{13}$C NMR spectroscopy.

7. The biaxially oriented polyethylene (BOPE) film according to any of the preceding claims, wherein the high density polyethylene (HDPE) is a copolymer of ethylene and at least one $C_3$-$C_{12}$ alpha-olefin, more preferably only one $C_4$-$C_{10}$ alpha-olefin, and most preferably 1-butene.

8. The biaxially oriented polyethylene (BOPE) film according to any of the preceding claims, wherein the first polyethylene fraction (PE1) has:

   a) a density of from 960 to 975 kg/m$^3$, more preferably from 965 to 975 kg/m$^3$, and/or
   b) a melt flow rate MFR$_2$ of from 200 to 500 g/10min.

9. The biaxially oriented polyethylene (BOPE) film according to any of the preceding claims, wherein the first polyethylene fraction (PE1) is an ethylene homopolymer.

10. The biaxially oriented polyethylene (BOPE) film according to any of the preceding claims, wherein the second polyethylene fraction (PE2) has:

   a) a density of from 930 to 960 kg/m$^3$, more preferably from 935 to 950 kg/m$^3$; and/or
   b) a melt flow rate MFR$_2$ of from 0.0005 to 0.5 g/10min, more preferably from 0.001 to 0.05 g/10 min.

11. The biaxially oriented polyethylene (BOPE) film according to any of the preceding claims, wherein the polyethylene wax has a density of from 960 to 990 kg/m$^3$, more preferably from 975 to 985 kg/m$^3$.

12. The biaxially oriented polyethylene (BOPE) film according to any of the preceding claims, wherein the polyethylene wax has:

   a) a weight average molecular weight Mw ranging from 4,000 to 10,000 g/mol, more preferably from 5,000 to 8,000 g/mol; and/or
   b) Mw/Mn ratio ranging from 1.5 to 4.0, more preferably from 2.2 to 3.5,

   wherein Mw and Mn are determined according to the method in the description.

13. The biaxially oriented polyethylene (BOPE) film according to any of the preceding claims, wherein the film comprises the polyethylene composition (C) in an amount of equal to or higher than 70 wt.-%, more preferably equal to or higher than 80 wt.-%, more preferably equal to or higher than 90 wt.-% based on the total weight of the film, more preferably the film consists of the polyethylene composition (C).

14. The biaxially oriented polyethylene (BOPE) film according to any of the preceding claims, wherein the film has:

   a) a tensile modulus in machine direction (TM/MD) ranging from 1400 to 2400 MPa, preferably from 1700 to 2200 MPa and most preferably from 1800 to 2000 MPa; and/or
   b) a tensile modulus in transverse direction (TM/TD) ranging from 1500 to 2500 MPa, preferably from 1700 to 2300 MPa and most preferably from 1800 to 2100 MPa,

   as determined in accordance with ASTM D882.

15. Use of the biaxially oriented polyethylene (BOPE) film according to any of the claims 1-14, in packaging articles.

**Patentansprüche**

1. Eine biaxial orientierte Polyethylen (BOPE) Folie, umfassend eine Polyethylen-Zusammensetzung (C) mit einer Dichte von 940 bis 970 kg/m$^3$, wobei die Polyethylen-Zusammensetzung umfasst:

   a) 75-99 Gew.-%, bezogen auf das Gesamtgewicht der Polyethylen-Zusammensetzung (C), eines Polyethylens hoher Dichte (HDPE) mit einer Dichte von 945 bis 970 kg/m$^3$ und einer Schmelzflussrate MFR$_2$ von 0,1 bis 3,0 g/10 min, umfassend mindestens zwei Fraktionen:

   a1) 30-70 Gew.-%, bezogen auf das Gesamtgewicht des HDPE, einer ersten Polyethylen-Fraktion (PE1) mit einer Dichte von 955 bis 980 kg/m$^3$ und einer Schmelzflussrate MFR$_2$ von 100 bis 1000 g/10 min, und
a2) 30-70 Gew.-%, bezogen auf das Gesamtgewicht des HDPE, einer zweiten Polyethylen-Fraktion (PE2) mit einer Dichte von 920 bis 970 kg/m$^3$ und einer Schmelzflussrate MFR$_2$ von 0,0001 bis 1,0 g/10 min,

b) 1-25 Gew.-%, bezogen auf das Gesamtgewicht der Polyethylen-Zusammensetzung (C), eines Polyethylen-Wachses mit einer Dichte von 940 bis 995 kg/m$^3$;

wobei die Dichte nach ISO1183 und die Schmelzflussrate MFR$_2$ bei einer Temperatur von 190 °C unter einer Belastung von 2,16 kg nach ISO1133 bestimmt wird.

2. Die biaxial orientierte Polyethylen (BOPE) Folie nach Anspruch 1, wobei die Polyethylen-Zusammensetzung (C) aufweist:

a) eine Schmelzflussrate MFR$_2$ von 0,1 bis 3,0 g/10 min, vorzugsweise von 0,5 bis 2,0 g/10 min; und/oder
b) eine Schmelzflussrate MFR$_{21}$ von 20 bis 100 g/10 min, vorzugsweise von 55 bis 80 g/10 min.

3. Die biaxial orientierte Polyethylen (BOPE) Folie nach einem der vorhergehenden Ansprüche, wobei die Menge des Polyethylens hoher Dichte (HDPE) im Bereich von 90 bis 97 Gew.-% und die Menge des Polyethylen-Wachses im Bereich von 3 bis 10 Gew.-% liegt, bezogen auf das Gesamtgewicht der Polyethylen-Zusammensetzung (C).

4. Die biaxial orientierte Polyethylen (BOPE) Folie nach einem der vorhergehenden Ansprüche, wobei das Polyethylen hoher Dichte (HDPE) aufweist:

a) eine Dichte von 950 bis 965 kg/m$^3$; und/oder
b) eine Schmelzflussrate MFR$_2$ von 0,3 bis 2,0 g/10 min, bevorzugter von 0,5 bis 1,5 g/10 min und am meisten bevorzugt von 0,6 bis 1,2 g/10 min.

5. Die biaxial orientierte Polyethylen (BOPE) Folie nach einem der vorhergehenden Ansprüche, wobei das Polyethylen hoher Dichte (HDPE) bimodal ist.

6. Die biaxial orientierte Polyethylen (BOPE) Folie nach einem der vorhergehenden Ansprüche, wobei das Polyethylen hoher Dichte (HDPE) einen Gesamtcomonomergehalt von 0 bis 1,5 Mol-%, bevorzugter von 0,1 bis 0,6 Mol-% bestimmt durch $^{13}$C NMR-Spektroskopie aufweist, gemäß des Verfahrens wie in der Beschreibung beschrieben.

7. Die biaxial orientierte Polyethylen (BOPE) Folie nach einem der vorhergehenden Ansprüche, wobei das Polyethylen hoher Dichte (HDPE) ein Copolymer aus Ethylen und mindestens einem C$_3$-C$_{12}$-Olefin, vorzugsweise nur einem C$_4$-C$_{10}$-Olefin und am meisten bevorzugt 1-Buten ist.

8. Die biaxial orientierte Polyethylen (BOPE) Folie nach einem der vorhergehenden Ansprüche, wobei die erste Polyethylen-Fraktion (PE1) aufweist:

a) eine Dichte von 960 bis 975 kg/m$^3$, vorzugsweise von 965 bis 975 kg/m$^3$, und/oder
b) eine Schmelzflussrate MFR$_2$ von 200 bis 500 g/10min.

9. Die biaxial orientierte Polyethylen (BOPE) Folie nach einem der vorhergehenden Ansprüche, wobei die erste Polyethylen-Fraktion (PE1) ein Ethylenhomopolymer ist.

10. Die biaxial orientierte Polyethylen (BOPE) Folie nach einem der vorhergehenden Ansprüche, wobei die zweite Polyethylen-Fraktion (PE2) aufweist:

a) eine Dichte von 930 bis 960 kg/m$^3$, vorzugsweise von 935 bis 950 kg/m$^3$; und/oder
b) eine Schmelzflussrate MFR$_2$ von 0,0005 bis 0,5 g/10 min, vorzugsweise von 0,001 bis 0,05 g/10 min.

11. Die biaxial orientierte Polyethylen (BOPE) Folie nach einem der vorhergehenden Ansprüche, wobei das Polyethylen-Wachs eine Dichte von 960 bis 990 kg/m$^3$, vorzugsweise von 975 bis 985 kg/m$^3$, aufweist.

12. Die biaxial orientierte Polyethylen (BOPE) Folie nach einem der vorangehenden Ansprüche, wobei das Polyethylen-Wachs aufweist:

a) ein gewichtsmittleres Molekulargewicht Mw im Bereich von 4.000 bis 10.000 g/mol, vorzugsweise von 5.000 bis 8.000 g/mol; und/oder

b) ein Verhältnis Mw/Mn von 1,5 bis 4,0, vorzugsweise von 2,2 bis 3,5, wobei Mw/Mn bestimmt werden gemäß des Verfahrens wie in der Beschreibung beschrieben.

13. Die biaxial orientierte Polyethylen (BOPE) Folie nach einem der vorhergehenden Ansprüche, wobei die Folie die Polyethylen-Zusammensetzung (C) in einer Menge von gleich oder höher als 70 Gew.-%, bevorzugter gleich oder höher als 80 Gew.-%, bevorzugter gleich oder höher als 90 Gew.-%, bezogen auf das Gesamtgewicht der Folie, umfasst, wobei die Folie vorzugsweise aus der Polyethylen-Zusammensetzung (C) besteht.

14. Die biaxial orientierte Polyethylen (BOPE) Folie nach einem der vorhergehenden Ansprüche, wobei die Folie aufweist:

a) ein Zugmodul in Maschinenrichtung (TM/MD) im Bereich von 1400 bis 2400 MPa, vorzugsweise von 1700 bis 2200 MPa und besonders bevorzugt von 1800 bis 2000 MPa; und/oder

b) ein Zugmodul in Querrichtung (TM/TD) im Bereich von 1500 bis 2500 MPa, vorzugsweise von 1700 bis 2300 MPa und besonders bevorzugt von 1800 bis 2100 MPa, wie nach ASTM D882 bestimmt.

15. Verwendung der Folie aus biaxial orientiertem Polyethylen (BOPE) nach einem der Ansprüche 1 bis 14 in Verpackungsartikeln.

## Revendications

1. Film de polyéthylène orienté biaxialement (BOPE) comprenant une composition de polyéthylène (C) ayant une masse volumique de 940 à 970 kg/m$^3$, dans lequel la composition de polyéthylène comprend :

a) 75 à 99 % en poids, rapporté au poids total de la composition de polyéthylène (C), d'un polyéthylène haute densité (HDPE) ayant une masse volumique de 945 à 970 kg/m$^3$, et un indice de fluidité MFR$_2$ de 0,1 à 3,0 g/10 min, comprenant au moins deux fractions :

a1) 30 à 70 % en poids, rapporté au poids total du HDPE, d'une première fraction de polyéthylène (PE1) ayant une masse volumique de 955 à 980 kg/m$^3$, et un indice de fluidité MFR$_2$ de 100 à 1000 g/10 min, et

a2) 30 à 70 % en poids, rapporté au poids total du HDPE, d'une deuxième fraction de polyéthylène (PE2) ayant une masse volumique de 920 à 970 kg/m$^3$, et un indice de fluidité MFR$_2$ de 0,0001 à 1,0 g/10 min,

b) 1 à 25 % en poids, rapporté au poids total de la composition de polyéthylène (C), d'une cire de polyéthylène ayant une masse volumique de 940 à 995 kg/m$^3$ ;

dans lequel la masse volumique est déterminée conformément à ISO1183 et l'indice de fluidité MFR$_2$ est déterminé à une température de 190 °C sous une charge de 2,16 kg conformément à ISO1133.

2. Film de polypropylène orienté biaxialement (BOPE) selon la revendication 1, dans lequel la composition de polypropylène (C) a :

a) un indice de fluidité MFR$_2$ de 0,1 à 3,0 g/10 min, plus préférentiellement de 0,5 à 2,0 g/10 min ; et/ou

b) un indice de fluidité MFR$_{21}$ de 20 à 100 g/10 min, plus préférentiellement de 55 à 80 g/10 min.

3. Film de polyéthylène orienté biaxialement (BOPE) selon l'une des revendications précédentes, dans lequel la quantité du polyéthylène haute densité (HDPE) va de 90 à 97 % en poids et la quantité de la cire de polyéthylène va de 3 à 10 % en poids, rapporté au poids total de la composition de polyéthylène (C).

4. Film de polyéthylène orienté biaxialement (BOPE) selon l'une des revendications précédentes, dans lequel le polyéthylène haute densité (HDPE) a :

a) une masse volumique de 950 à 965 kg/m$^3$ ; et/ou

b) un indice de fluidité MFR$_2$ de 0,3 à 2,0 g/10 min, plus préférentiellement de 0,5 à 1,5 g/10 min et le plus préférentiellement de 0,6 à 1,2 g/10 min.

5. Film de polyéthylène orienté biaxialement (BOPE) selon l'une des revendications précédentes, dans lequel le polyéthylène haute densité (HDPE) est bimodal.

6. Film de polyéthylène orienté biaxialement (BOPE) selon l'une des revendications précédentes, dans lequel le polyéthylène haute densité (HDPE) a une teneur totale en comonomères de 0 à 1,5 % mol, plus préférentiellement de 0,1 à 0,6 % mol, telle que déterminée selon le procédé de la description par spectroscopie RMN $^{13}$C.

7. Film de polyéthylène orienté biaxialement (BOPE) selon l'une des revendications précédentes, dans lequel le polyéthylène haute densité (HDPE) est un copolymère d'éthylène et d'au moins une $C_3$-$C_{12}$ alpha-oléfine, plus préférentiellement de seulement une $C_4$-$C_{10}$ alpha-oléfine, et le plus préférentiellement de 1-butène.

8. Film de polyéthylène orienté biaxialement (BOPE) selon l'une des revendications précédentes, dans lequel la première fraction de polyéthylène (PE1) a :

   a) une masse volumique de 960 à 975 kg/m$^3$, plus préférentiellement de 965 à 975 kg/m$^3$, et/ou
   b) un indice de fluidité MFR$_2$ de 200 à 500 g/10 min.

9. Film de polyéthylène orienté biaxialement (BOPE) selon l'une des revendications précédentes, dans lequel la première fraction de polyéthylène (PE1) est une homopolymère d'éthylène.

10. Film de polyéthylène orienté biaxialement (BOPE) selon l'une des revendications précédentes, dans lequel la deuxième fraction de polyéthylène (PE2) a :

    a) une masse volumique de 930 à 960 kg/m$^3$, plus préférentiellement de 935 à 950 kg/m$^3$ ; et/ou
    b) un indice de fluidité MFR$_2$ de 0,0005 à 0,5 g/10 min, plus préférentiellement de 0,001 à 0,05 g/10 min.

11. Film de polyéthylène orienté biaxialement (BOPE) selon l'une des revendications précédentes, dans lequel la cire de polyéthylène a une masse volumique de 960 à 990 kg/m$^3$, plus préférentiellement de 975 à 985 kg/m$^3$.

12. Film de polyéthylène orienté biaxialement (BOPE) selon l'une des revendications précédentes, dans lequel la cire de polyéthylène a :

    a) un poids moléculaire moyen en poids Mw allant de 4000 à 10000 g/mol, plus préférentiellement de 5000 à 8000 g/mol ; et/ou
    b) un rapport Mw/Mn allant de 1,5 à 4,0, plus préférentiellement de 2,2 à 3,5, dans lequel Mw et Mn sont déterminés selon le procédé de la description.

13. Film de polyéthylène orienté biaxialement (BOPE) selon l'une des revendications précédentes, dans lequel le film comprend la composition de polyéthylène (C) en une quantité égale ou supérieure à 70 % en poids, plus préférentiellement égale ou supérieure à 80 % en poids, plus préférentiellement égale ou supérieure à 90 % en poids rapporté au poids total du film, plus préférentiellement le film est constitué de la composition de polyéthylène (C).

14. Film de polyéthylène orienté biaxialement (BOPE) selon l'une des revendications précédentes, dans lequel le film a :

    a) un module de traction dans le sens machine (TM/MD) allant de 1400 à 2400 MPa, de préférence de 1700 à 2200 MPa et le plus préférentiellement de 1800 à 2000 MPa ; et/ou
    b) un module de traction dans le sens travers (TM/TD) allant de 1500 à 2500 MPa, de préférence de 1700 à 2300 MPa et le plus préférentiellement de 1800 à 2100 MPa, tel que déterminé conformément à ASTM D882.

15. Utilisation du film de polyéthylène orienté biaxialement (BOPE) selon l'une des revendications 1 à 14, dans des articles de conditionnement.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020257411 A
- EP 1609811 B1
- WO 2006074693 A
- WO 9744371 A
- WO 9618662 A
- US 4582816 A
- US 3405109 A
- US 3324093 A
- EP 479186 A
- US 5391654 A
- US 3374211 A
- US 3242150 A
- EP 1310295 A
- EP 891990 A

- EP 1415999 A
- EP 1591460 A
- WO 2007025640 A
- WO 9619503 A
- WO 9632420 A
- EP 1378528 A1
- EP 688794 A
- WO 9951646 A
- WO 0155230 A
- WO 2005118655 A
- EP 810235 A
- WO 2014096296 A
- WO 2016097193 A
- EP 1378528 A

**Non-patent literature cited in the description**

- Biaxial stretching of film: principles and applications. Woodhead Publishing, 2011
- **KLIMKE, K.** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- **POLLARD, M.** ; **KLIMKE, K.** ; **GRAF, R.** ; **SPIESS, H.W.** ; **WILHELM, M.** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C.** *J. Mag. Resn.*, 2005, vol. 176, 239
- **GRIFFIN, J.M.** ; **TRIPON, C.** ; **SAMOSON, A.** ; **FILIP, C.** ; **BROWN, S.P.** *Mag. Res. in Chem.*, 2007, vol. 45, S1, S198

- **CASTIGNOLLES, P.** ; **GRAF, R.** ; **PARKINSON, M.** ; **WILHELM, M.** ; **GABORIEAU, M.** *Polymer*, 2009, vol. 50, 2373
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromoleucles*, 1997, vol. 30, 6251
- **ZHOU, Z.** ; **KUEMMERLE, R.** ; **QIU, X.** ; **REDWINE, D.** ; **CONG, R.** ; **TAHA, A.** ; **BAUGH, D** ; **WINNIFORD, B.** *J. Mag. Reson*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **RESCONI, L.** ; **CAVALLO, L.** ; **FAIT, A.** ; **PIEMONTESI, F.** *Chem. Rev.*, 2000, vol. 100, 1253